# DEMANDE DE BREVET EUROPEEN

(11) **EP 2 685 694 A1**
(43) Date de publication de la demande: **15.01.2014**
(21) Numéro de dépôt: 12305841.4
(22) Date de dépôt: 12.07.2012
(51) Int. Cl.: H04L 29/06, H04L 29/12

(54) **Procédé d'enregistrement d'au moins une adresse publique dans un réseau IMS et application correspondante**

(71) Demandeur: Gemalto SA, 92190 Meudon (FR)
(72) Inventeur: Baudouin, Julien, 13705 La Ciotat (FR); Fine, Jean-Yves, 13705 La Ciotat (FR)

(57) **Abrégé**

L'invention concerne notamment un procédé d'enregistrement d'au moins une adresse publique dans un réseau IMS comprenant un terminal (101) coopérant avec un élément de sécurité (100).

Selon l'invention, l'élément de sécurité (100) comprend une application invitant l'utilisateur (104) du terminal (101), à l'occurrence d'un événement, à entrer une adresse publique de son choix par l'intermédiaire de l'interface homme-machine du terminal (101), l'application transmettant l'adresse publique accompagnée d'au moins un identifiant de l'élément de sécurité (100) à un réseau distant (102, 103) par l'intermédiaire du terminal ((101, afin que le réseau distant (102, 103) associe l'adresse publique à l'identifiant.

## Description

Le domaine de l'invention est celui des télécommunications dans des réseaux de transmission de données. Plus précisément, la présente invention concerne l'enregistrement d'au moins une adresse publique dans un réseau IMS (IP Multimedia Subsystem).

Un réseau IMS est un réseau IP connecté à un réseau d'accès. Le réseau IMS fournit une combinaison dynamique de transport de voix, vidéo, messages, données, etc. pendant la même session. L'IMS utilise le protocole SIP (Session Initiation Protocol) pour établir et contrôler des communications ou des sessions entre des terminaux d'usagers (appelés points terminaux) ou entre des points terminaux et des serveurs d'application. Le protocole SIP permet à un appelant d'établir une session par commutation de paquets avec une personne appelée (en utilisant SIP User Agents, UAS, installés dans les points terminaux), même si l'appelant ne connaît pas l'adresse IP courante de l'appelé avant d'initier l'appel.

Les spécifications 3GPP IMS actuelles demandent l'utilisation d'une procédure d'authentification des utilisateurs vers le réseau IMS. Cette procédure est décrites dans 3GPP TS 24.229 et 33.203. En utilisant cette approche, une identité de l'utilisateur privé (IMPI) et une ou plusieurs identités publiques des utilisateurs (IMPU) sont alloués à l'utilisateur par l'opérateur. Afin de participer à des sessions multimédia, l'utilisateur doit enregistrer au moins un IMPU sur le réseau. Les identités sont ensuite utilisées par le réseau pour identifier l'utilisateur lors de l'enregistrement et la procédure d'authentification (l'IMPI est utilisé pour localiser les renseignements sur les abonnés, comme les informations d'authentification utilisateur, tandis que le modèle d'imputation précise l'identité d'utilisateur avec lequel l'utilisateur souhaite interagir, et à laquelle des services spécifiques doivent être attachés). L'IMPI et les IMPU sont stockés dans une application appelée IMS Subscriber Identity Module (ISIM) stockée classiquement sur une carte à circuit intégré (UICC) dans le terminal de l'utilisateur.

Chaque IMPU est associé à un soi-disant profil de service. Le profil de service est un ensemble de services et de données connexes, qui comprend, entre autres, les critères de filtrage initial qui fournissent une logique de service simple pour l'utilisateur (par exemple, il définit un ensemble de services IMS que l'identité publique IMPU pourra utiliser).

Le réseau d'accès au réseau IMS est par exemple un réseau UMTS, LTE, WLAN et/ou Internet.

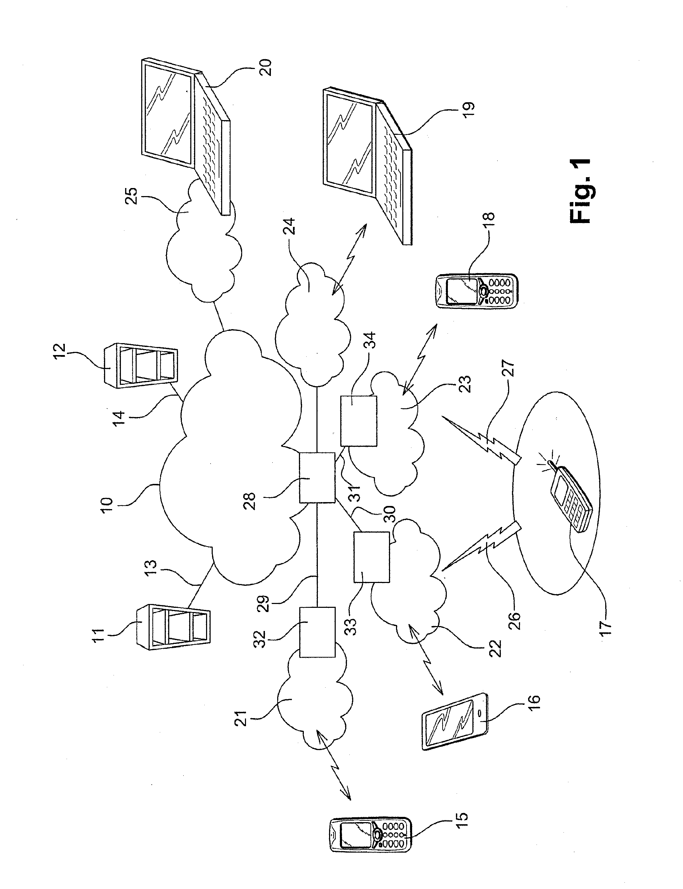

La figure 1 représente un tel réseau IMS connecté à différents réseaux d'accès.

Un réseau IMS 10, tel que défini par 3GPP TS 23.228, est connecté à des serveurs d'application 11, 12 par des liaisons SIP 13, 14. Les serveurs 11 et 12 hébergent des applications IMS représentant des services tels que de la messagerie instantanée, du management de présence (utilisateur présent, absent, en réunion,...), du filtrage d'appel et des sessions temps réel tel que de la voix sur IP (VoIP), de la visioconférence, de la vidéo à la demande, du partage de vidéos, des jeux en réseau ou de télévision via IP.

Des utilisateurs de points terminaux 15 à 20 accèdent à ces services du réseau IMS par l'intermédiaire de réseaux d'accès, tel qu'un réseau UMTS 21, un réseau LTE (Long Term Evolution) 22, un réseau 3GPP2 23, un réseau WLAN 24 ou un réseau Internet 25. Le terminal 17 communique par une liaison sans fil 26 avec le réseau LTE 22 et une liaison EV-DO 27 avec le réseau 3GPP2 23.

Le réseau IMS comporte un proxy 28 relié par des liaisons SIP 29 à 31 à des passerelles d'interconnexion, telle qu'une passerelle GGSN (Gateway GPRS Support Node) 32 notamment chargée de fournir une adresse IP au point terminal 15 constitué par un terminal GPRS pendant toute la durée de sa connexion au réseau IMS, une passerelle PDN GW (Packet Data Network Gateway) 33 assurant le même service pour les terminaux LTE 16 et 17, et une passerelle PDSN (Packet Data Serving Node) 34 assurant une connexion via le réseau 3GPP2 23 du terminal 18 de type CDMA 2000.

L'accès aux services du réseau IMS 10 par les utilisateurs des points terminaux 15 à 20 est obtenu après que ces utilisateurs se soient connectés à leurs réseaux d'accès et aient demandé une connexion IP vers ce réseau IMS 10. Les points terminaux peuvent également communiquer entre eux par l'intermédiaire du réseau IMS, par exemple par VoIP.

L'authentification des points terminaux par le réseau IMS 10 est obtenu grâce à leurs identités privées IMPIs, généralement comprises dans une application USIM ou ISIM embarquée dans chacun des points terminaux 15 à 20. Chaque point terminal possède donc sa propre identité privée IMPI. Au cours de la demande d'accès au réseau IMS 10, un point terminal envoie son IMPI au réseau 10 et, s'il y est authentifié (dans un serveur d'enregistrement appelé HSS - Home Subscriber Subsystem), des droits d'accès lui sont accordés en fonction de son profil et de son abonnement. Le réseau IMS procède notamment à la facturation de l'utilisateur et au contrôle de la session.

Chaque point terminal 15 à 20 renferme également au moins une adresse publique IMPU (donc non secrète) qui permet à son utilisateur de requérir et recevoir des communications avec d'autres utilisateurs ou d'accéder à un service. Les IMPUs se présentent sous la forme d'un SIP URI (Unified Resource Identifier) tel que défini dans les recommandations IETF RFC 3261 et IETF RFC 2396. A titre d'exemple, une adresse IMPU pourrait se présenter sous la forme :
sip : jean-yves@gemalto.com
   ou alors sous la forme d'un numéro de téléphone :
sip : 0123456789@gemalto.ims.com.

A contrario, le format d'une adresse privée IMPI est du type :
<xyz>@gemalto.com
avec <xyz> étant une chaîne de caractères quelconques, le format d'un IMPI étant dit Network Access Identifier tel que décrit dans la recommandation IETF RFC 2486.

Les IMPU et l'IMPI sont classiquement stockés dans l'application ISIM d'un point terminal. Le point terminal peut comporter un logiciel qui peut enregistrer des IMPUs ou alors il est laissé à son utilisateur le droit d'enregistrer des IMPUs, c'est-à-dire de choisir l'IMPU actif à un moment donné. L'utilisateur peut ainsi par exemple décider que son IMPU professionnel soit actif pendant ses horaires de bureau et que son IMPU privé soit actif hors de ces horaires.

Si le point terminal ne comporte pas d'application ISIM ou USIM, les IMPU et l'IMPI sont stockés dans une mémoire du point terminal. Dans un mode de réalisation classique, l'ISIM est stockée dans un élément sécurisé, par exemple sur une carte à puce UICC extractible du point terminal. Une carte UICC peut porter une ou plusieurs applications ISIM ou USIM. L'élément sécurisé peut également faire partie intégrante du point terminal.

Après ou pendant l'authentification d'un point terminal par reconnaissance de son IMPI et de la vérification des secrets dont il dispose, le point terminal envoie une de ses adresses IMPU au HSS du réseau IMS 10 afin de s'y enregistrer et de bénéficier d'un service IMS.

Le problème que se propose de résoudre la présente invention est le suivant : lors de la personnalisation d'un UICC ou d'un terminal, l'utilisateur final n'est pas connu. Il n'y a donc pas d'IMPU dans l'UICC ou dans le terminal vendu à l'utilisateur final. Au mieux un IMPU quelconque (non personnalisé) est stocké dans l'UICC (par exemple martinl234@gemalto.com). L'enregistrement d'IMPUs par l'utilisateur d'un terminal est donc habituellement réalisé au point de vente du terminal, dans une agence commerciale de l'opérateur. Un agent commercial de l'opérateur auprès duquel l'utilisateur souscrit un abonnement enregistre, par l'intermédiaire d'un terminal opérateur, un ou plusieurs IMPUs choisis par l'utilisateur final. Cet ou ces IMPUs sont alors chargés par une voie ad hoc dans l'UICC ou dans le terminal (liaison filaire, OTA,...) et le HSS de l'opérateur en est informé en parallèle.

Concrètement et à titre d'exemple, l'agent de l'opérateur entre un code administratif ADM en utilisant la commande « Verify Pin » et met à jour le fichier EF_IMPU de l'UICC à l'aide d'une commande « Update », l'UICC étant insérée dans un lecteur de carte.

L'inconvénient de cette solution est que l'utilisateur final a besoin de se rendre dans une agence de l'opérateur pour la personnalisation de son terminal/UICC pour y enregistrer un ou plusieurs IMPUs de son choix. Ceci est également valable si l'utilisateur, au cours de l'utilisation de son terminal, souhaite ajouter, supprimer ou modifier un de ses IMPUs.

De plus, le standard 3GPP TS 31.103 ne permet pas à un utilisateur de mettre à jour l'ISIM de son terminal: l'accès au fichier EF_IMPU nécessite une commande de type administrative (« ADM command » en anglais) que seul l'opérateur connaît. L'utilisateur final n'a donc pas la possibilité de modifier ou de mettre à jour de lui-même le contenu de ce fichier renfermant un ou plusieurs IMPUs. On se référera avantageusement à la version 10 du standard publiée en avril 2011, où le paragraphe 4.2.4 intitulé EF_IMPU (IMS public user identity) montre que les commandes « Update », « Deactivate » et « Activate » d'IMPUs sont protégées par des codes administratifs.

La présente invention a notamment pour objectif de remédier à cet inconvénient.

Plus précisément, un des objectifs de l'invention est de fournir un procédé et une application permettant à l'utilisateur d'un terminal comprenant un élément de sécurité de créer, modifier, activer ou désactiver personnellement une adresse publique IMPU à partir de son terminal, sans avoir à se rendre auprès d'une agence commerciale de son opérateur de radiotéléphonie.

Cet objectif, ainsi que d'autres qui apparaîtront par la suite, est atteint grâce à un procédé d'enregistrement d'au moins une adresse publique dans un réseau IMS comprenant un terminal coopérant avec un élément de sécurité, l'élément de sécurité comprenant une application invitant l'utilisateur du terminal, à l'occurrence d'un événement, à entrer une adresse publique de son choix par l'intermédiaire de l'interface homme-machine du terminal, l'application transmettant l'adresse publique accompagnée d'au moins un identifiant de l'élément de sécurité à un réseau distant par l'intermédiaire du terminal, afin que le réseau distant associe l'adresse publique à l'identifiant.

Préférentiellement, le réseau distant comprend une plateforme OTA faisant office de point d'entrée vers un HSS d'un réseau IMS.

Avantageusement, le procédé selon l'invention consiste à transmettre du réseau distant à l'élément de sécurité un message d'acquittement d'association une fois que l'adresse publique est associée à l'identifiant.

Dans un mode de mise en oeuvre avantageux, l'invention consiste à mettre à jour le terminal avec l'adresse publique après réception du message d'acquittement d'association par l'élément de sécurité.

Préférentiellement, l'identifiant de l'élément de sécurité comprend au moins l'un des identifiants suivants :
- l'IMSI;
- l'ICCID;
- l'IMPI.

L'événement est par exemple la première mise sous tension du terminal.

L'invention concerne également une application pour l'enregistrement d'au moins une adresse publique dans un réseau IMS comprenant un terminal coopérant avec un élément de sécurité, l'élément de sécurité renfermant ladite application, cette application invitant l'utilisateur du terminal, à l'occurrence d'un événement, à entrer une adresse publique de son choix par l'intermédiaire de l'interface homme-machine du terminal, l'application transmettant l'adresse publique accompagnée d'au moins un identifiant de l'élément de sécurité à un réseau distant par l'intermédiaire du terminal, afin que le réseau distant associe l'adresse publique à l'identifiant.

D'autres caractéristiques et avantages de l'invention apparaîtront à la lecture de la description suivante d'un mode de mise en oeuvre préférentiel, donné à titre illustratif et non limitatif, et des figures annexées dans lesquelles :
- la figure 1 représente un réseau IMS connecté à différents réseaux d'accès ;
- la figure 2 représente un exemple de mise en oeuvre du procédé selon l'invention. La figure 1 a été décrite en référence à l'état de la technique.

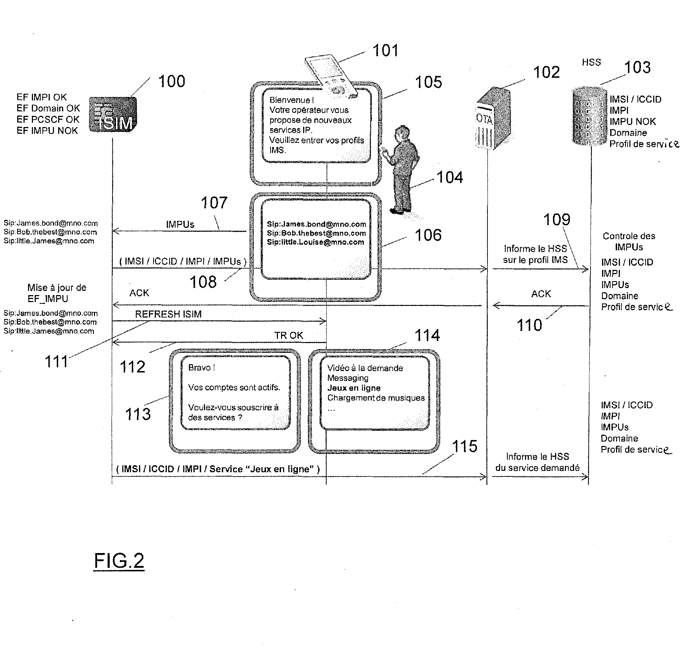

La figure 2 représente un exemple de mise en oeuvre du procédé selon l'invention.

L'invention propose d'exploiter une application (applet) installée dans une ISIM au sein d'un UICC 100. L'UICC 100 est comprise dans un terminal 101, ici représenté sous la forme d'un téléphone mobile. L'application peut également être installée dans une puce (eUICC) solidaire du terminal 101, l'UICC 100 étant dans ce cas non extractible du terminal 101 comme peut l'être une carte SIM.

L'UICC 100 ou l'eUICC peut également communiquer par voie radio (Bluetooth ou Wifi par exemple) avec le terminal 101, c'est-à-dire qu'elle n'a pas besoin d'être comprise dans le terminal 101. Elle peut par exemple être comprise dans un élément déporté tel qu'une montre, l'essentiel étant qu'elle communique avec le terminal 101.

Le terminal 101 est apte à communiquer avec un réseau distant comprenant ici une plateforme OTA 101 et un élément HSS 103 d'un réseau d'opérateur. Le terminal 101 peut communiquer avec le HSS 103 par l'intermédiaire de la plateforme OTA 102.

Le HSS 103 a notamment pour fonction de stocker pour chaque utilisateur du réseau des informations concernant son UICC 100. A ce titre, à chaque UICC est associée un IMSI/ICCID, un IMPI, un ou plusieurs IMPUs, son domaine IMS (le domaine IMS permet aux abonnés de communiquer entre eux via les services IMS ou d'accéder à des services IMS hébergés sur des plateformes de service) et un profil de services. Avant l'exécution de l'application selon l'invention, le HSS 103 connaît l'utilisateur 104 par son IMSI, son ICCID et/ou son IMPI, le domaine auquel il appartient ainsi que son profil de services. Il sait également qu'aucun IMPU n'est associé à ces identifiants (IMPU NOK). De même, l'UICC 100 contient les fichiers EF_IMPI, EF_Domain et EF_PCSCF (fichier d'adresse IP du proxy d'accès à l'opérateur). L'UICC 100 contient également le fichier vide EF_IMPU (EF_IMPU NOK).

A l'occurrence d'un événement, par exemple lors de la première mise sous tension du terminal 101, lors de la mise sous tension du terminal 101 après téléchargement de l'application selon l'invention, ou alors par activation d'une fonction d'un menu, ou plus généralement à la demande, un message d'accueil 105 invite l'utilisateur 104 du terminal 101 à entrer un ou plusieurs profils IMS, un profil IMS correspondant à une adresse IMPU.

L'utilisateur 104 entre alors par l'intermédiaire de l'interface homme-machine du terminal 101, par exemple le clavier, une ou plusieurs IMPUs de son choix. Dans l'exemple représenté, il choisit les adresses suivantes lors d'une étape 106 :
Sip:James.bond@mno.com
Sip:Bob.thebest@mno.com
Sip:little.Louise@mno.com

L'application transmet ces adresses publiques à l'ISIM lors d'une étape 107 par une commande STK. L'ISIM stocke ces IMPUs provisoirement dans un répertoire ad hoc.

Lors d'une étape 108, l'application transmet les IMPUs choisis par l'utilisateur 104 à la plateforme OTA 102, accompagnés par au moins un identifiant de l'UICC. Dans l'exemple donné, trois identifiants de l'UICC sont transmis avec les IMPUs à la plateforme OTA 102 : l'IMSI, l'ICCID et l'IMPI. La plateforme OTA retransmet ces identifiants (IMSI / ICCID / IMPI /IMPUs) au HSS lors d'une étape 109. Le HSS 103 procède alors à un contrôle des IMPUs choisis par l'utilisateur 104. Ce contrôle consiste notamment à vérifier que les IMPUs reçus n'ont pas déjà été attribués à un autre utilisateur, abonné au même réseau d'opérateur ou à un autre réseau d'opérateur. Le HSS 103 associe également les IMPUs reçus à l'identifiant de l'UICC.

Si le HSS 103 constate que les IMPUs reçus sont disponibles, il en informe l'UICC par un message ACK (étape 110) d'acquittement d'association une fois que la ou les adresses publiques sont associées à l'identifiant ou aux identifiants reçus. Ce message est retransmis de la plateforme OTA 102 à l'UICC 100.

L'ISIM procède alors à une mise à jour de son fichier EF_IMPU 6F04 comprenant les IMPUs de l'utilisateur 104. Cette mise à jour consiste à y enregistrer les IMPUs préalablement stockés provisoirement dans le répertoire ad hoc précité.

Si un des IMPUs n'est pas disponible, il en informe également l'UICC afin qu'elle ne prenne pas en compte l'IMPU non disponible. Un message est alors affiché à l'utilisateur pour l'informer de la non-disponibilité de cet IMPU, avec éventuellement une invitation d'en choisir un autre.

L'application transmet alors une commande « Refresh ISIM » au terminal 101 (étape 111) afin que celui-ci prenne en compte les nouveaux IMPUs. Le terminal accuse alors bonne réception de ces IMPUs à l'étape 112. Une validation de l'enregistrement des IMPUs (réalisée après l'étape 110) peut alors être réalisée.

Facultativement, l'utilisateur 104 peut alors être invité à souscrire à des services (étape 113) puisqu'il dispose maintenant d'au moins une adresse IMPU. Si l'utilisateur accepte, une liste de services peut lui être proposée (étape 114). Ici, quatre services sont proposés à l'utilisateur :
- Vidéo à la demande
- Messaging
- Jeux en ligne
- Chargement de musiques

Si l'utilisateur choisit par exemple « Jeux en ligne », le HSS 103 reçoit une commande de service de jeux en ligne (étape 115), accompagnée par au moins un identifiant de l'UICC (ici, l'IMSI, l'ICCID et l'IMPI), par l'intermédiaire de la plateforme OTA 102. Le HSS 103, à l'aide de l'identifiant reçu, peut alors s'adresser à l'UICC 100 à l'aide d'un des IMPUs associés à l'identifiant reçu.

L'invention décrite précédemment a été faite dans le cadre de la création d'IMPUs mais elle peut également s'appliquer à la modification d'IMPUs existants, ainsi qu'à l'activation ou la désactivation d'IMPUs, tout comme à la suppression d'IMPUs.

L'application de l'ISIM permettant de mettre en oeuvre la présente invention peut être enregistrée dans cette ISIM sous le contrôle de l'opérateur, par exemple via la plateforme OTA 102. Son installation dans l'ISIM est réalisée sous le contrôle de l'opérateur et l'application comprend les droits PIN et administratifs (ADM). L'opérateur dispose des droits d'installation de l'application dans l'ISIM de l'UICC (eUICC) de l'utilisateur. L'application connaît donc le code administratif (ADM) permettant d'accéder au HSS et d'y enregistrer un ou plusieurs IMPUs.

L'invention repose donc sur une application de confiance qui est une applet installée sur un UICC. C'est cette applet qui initie le dialogue avec la plateforme OTA 102 et le HSS 103 pour envoyer les IMPUs choisis par l'utilisateur 104. Suite à l'accord du HSS 103, cette applet écrit (via une interface interne de l'OS et parce qu'elle a été installée avec le droit administratif ADM) les IMPUs choisis dans le fichier EF_IMPU.

L'invention permet donc à un utilisateur de créer, modifier, activer ou désactiver un ou plusieurs IMPUs dans un réseau IMS.

La plateforme OTA 102 qui fait office, dans la description précédente, de point d'entrée vers un HSS d'un réseau IMS peut être remplacée par un serveur d'applications relié au HSS de l'opérateur.

Les communications représentées sur la figure 2 sont préférentiellement de type http (réseau IP intégral tel que LTE), mais des communications de type SMS ou SIP peuvent également être utilisées entre le terminal 101 et la plateforme OTA 102, et même entre cette plateforme 102 et le HSS 103. Ces communications sont chiffrées par des mécanismes bien connus pour éviter toute fraude et assurer la sécurité de l'utilisateur 104 et de l'opérateur du réseau.

L'invention permet de trouver une voie parallèle au standard existant, en permettant à l'utilisateur d'un terminal de définir des adresses IMPUs de son choix, sans avoir à se rendre dans une agence de son opérateur.

L'invention concerne également une application pour l'enregistrement d'au moins une adresse publique dans un réseau IMS comprenant un terminal coopérant avec un élément de sécurité, l'élément de sécurité renfermant cette application invitant l'utilisateur du terminal, à l'occurrence d'un événement, à entrer une adresse publique de son choix par l'intermédiaire de l'interface homme-machine du terminal, cette application transmettant l'adresse publique accompagnée d'au moins un identifiant de l'élément de sécurité à un réseau distant par l'intermédiaire de ce terminal, afin que le réseau distant associe l'adresse publique à l'identifiant reçu.

L'invention permet d'éviter à un utilisateur d'un terminal d'avoir à se rendre dans une agence de son opérateur de téléphonie ou de se connecter à un service internet après avoir acheté son terminal avec son UICC (eUICC) afin de le configurer avec son (ses) IMPU(s).

Le HSS de l'opérateur est mis à jour de manière dynamique par l'utilisateur final et l'invention répond aux standards de l'IMS, du 3GPP sur l'ISIM et des échanges OTA (« OTA messaging » en anglais) et de l'approvisionnement du HSS de l'opérateur.

## Revendications

1. Procédé d'enregistrement d'au moins une adresse publique dans un réseau IMS comprenant un terminal (101) coopérant avec un élément de sécurité (100), **caractérisé en ce que** ledit élément de sécurité (100) comprend une application invitant l'utilisateur (104) dudit terminal (101), à l'occurrence d'un événement, à entrer une adresse publique de son choix par l'intermédiaire de l'interface homme-machine dudit terminal (101), ladite application transmettant ladite adresse publique accompagnée d'au moins un identifiant dudit élément de sécurité (100) à un réseau distant (102, 103) par l'intermédiaire dudit terminal (101), afin que ledit réseau distant (102, 103) associe ladite adresse publique audit identifiant.

2. Procédé selon la revendication 1, **caractérisé en ce que** ledit réseau distant comprend une plateforme OTA (102) faisant office de point d'entrée vers un HSS (103) d'un réseau IMS.

3. Procédé selon l'une des revendications 1 et 2, **caractérisé en ce qu'**il consiste à transmettre dudit réseau distant (102, 103) audit élément de sécurité (100) un message d'acquittement d'association (110) une fois que ladite adresse publique est associée audit identifiant.

4. Procédé selon la revendication 3, **caractérisé en ce qu'**il consiste à mettre à jour ledit terminal (101) avec ladite adresse publique après réception dudit message d'acquittement d'association (110) par ledit élément de sécurité (100).

5. Procédé selon l'une des revendications 1 à 4, **caractérisé en ce que** ledit identifiant dudit élément de sécurité (100) comprend au moins l'un des identifiants suivants :
- l'IMSI;
- l'ICCID;
- l'IMPI.

6. Procédé selon l'une des revendications 1 à 5, **caractérisé en ce que** ledit événement est la première mise sous tension dudit terminal (101).

7. Application pour l'enregistrement d'au moins une adresse publique dans un réseau IMS comprenant un terminal (101) coopérant avec un élément de sécurité (100), ledit élément de sécurité (100) renfermant ladite application, **caractérisé en ce que** ladite application invite l'utilisateur (104) dudit terminal (101), à l'occurrence d'un événement, à entrer une adresse publique de son choix par l'intermédiaire de l'interface homme-machine dudit terminal (101), ladite application transmettant ladite adresse publique accompagnée d'au moins un identifiant dudit élément de sécurité (100) à un réseau distant (102, 103) par l'intermédiaire dudit terminal (101), afin que ledit réseau distant (102, 103) associe ladite adresse publique audit identifiant.
